(19) Europäisches Patentamt
European Patent Office
Office européen des brevets

(11) Publication number : **0 484 019 A1**

(12) **EUROPEAN PATENT APPLICATION**

(21) Application number : **91309647.5**

(22) Date of filing : **18.10.91**

(51) Int. Cl.$^5$ : **C08F 299/06**, C08L 51/08

(30) Priority : **31.10.90 GB 9023698**

(43) Date of publication of application : **06.05.92 Bulletin 92/19**

(84) Designated Contracting States : **AT BE CH DE ES FR GB IT LI NL**

(71) Applicant : **IMPERIAL CHEMICAL INDUSTRIES PLC**
**Imperial Chemical House, Millbank**
**London SW1P 3JF (GB)**

(72) Inventor : **Orton, Michael Leslie**
**24 School Lane, Hartford**
**Northwich, Cheshire (GB)**
Inventor : **Sivshankar, Selvarajah**
**8 Kingsmead Close**
**Roydon, Essex (GB)**
Inventor : **Jackson, Graham Vincent**
**56 Queensway**
**Newton, Chester (GB)**
Inventor : **Bucknall, Clive Brian**
**17 East Hills, Cranfield**
**Bedfordshire MK43 0EA (GB)**

(74) Representative : **Downer, John Michael et al**
**Imperial Chemical Industries PLC Legal Department: Patents PO Box 6 Bessemer Road**
**Welwyn Garden City Herts, AL7 1HD (GB)**

(54) **Polymerisable compositions.**

(57) A polymerisable composition comprising an ethylenically unsaturated urethane composition comprising at least one ethylenically unsaturated urethane compound having an average double bond functionality of greater than 1.0, an ethylenically unsaturated monomer which is a vehicle for, and is copolymerisable with, the unsaturated urethane composition, and a particulate methyl methacrylate/butadiene/styrene (MBS) rubber modifier. Also claimed is a polymer article prepared from said composition and a method of preparing said article.

EP 0 484 019 A1

Jouve, 18, rue Saint-Denis, 75001 PARIS

The present invention relates to polymerisable compositions for moulding applications comprising an ethylenically unsaturated urethane composition, an ethylenically unsaturated monomer copolymerisable with said urethane composition, and a particulate rubber modifier. The present invention also includes rubber modified polymer articles prepared from the said polymerisable compositions.

Polymerisable compositions comprising an unsaturated urethane composition and an ethylenically unsaturated monomer copolymerisable therewith are known in the art. It is a desirable end to improve the mechanical properties of the cured polymeric products prepared from such polymerisable compositions, in particular with a view to improving their toughness and notch sensitivity.

According to the present invention there is provided a polymerisable composition comprising:

(A) a polymerisable liquid which on curing forms a solid polymer matrix, said polymerisable liquid comprising:

(i) an ethylenically unsaturated urethane composition comprising at least one ethylenically unsaturated urethane compound having an average double bond functionality of greater than 1.0, or the precursors for such a urethane composition, and

(ii) at least one ethylenically unsaturated monomer which is a vehicle for, and is copolymerisable with, the unsaturated urethane composition which is either present as a preformed species or is formed by reaction of the precursors therefor in the at least one ethylenically unsaturated monomer; and

(B) at least one particulate methyl methacrylate/butadiene/styrene (MBS) rubber modifier.

According to a further aspect of the present invention there is provided a rubber modified polymer article formed by curing the polymerisable composition described above.

The MBS rubber modifier is preferably incorporated in the polymerisable composition of the invention in an amount of from 0.5 to 50 % by weight, more preferably in an amount of from 2 to 40 % by weight, and especially in an amount of from 5 to 20 % by weight based on the weight of the polymerisable liquid. The particulate MBS rubbers for use in the present invention typically have a primary (unagglomerated) particle size in the range 0.05 to 5.0 microns, preferably 0.05 to 1.0 micron.

The methyl methacrylate/butadiene/styrene (MBS) rubbers which are employed as modifiers in the polymerisable compositions of the present invention constitute a readily available class of rubbers. MBS rubbers consist substantially of polymerised residues derived from the addition polymerisation of methyl methacrylate, butadiene and styrene monomers, and are usually graft polymers prepared by polymerising methyl methacrylate, optionally in the presence of a minor proportion of other ethylenically unsaturated monomers such as ethyl acrylate, acrylonitrile or styrene, in the presence of a styrene/butadiene polymer rubber. The resulting MBS rubber is a two phase polymer typically comprising from 15 to 70 % by weight, preferably from 20 to 60 % by weight of polymerised residues of butadiene. MBS rubber modifiers and their preparation are known to the man skilled in the art.

A typical MBS rubber for use in the present invention consists essentially of:

(A) 25 to 85 parts by weight of a butadiene/styrene copolymer rubber comprising 50 to 90 % by weight of polymerised residues of butadiene and 10 to 50 % by weight of polymerised residues of styrene, said butadiene/styrene copolymer having grafted thereto (B) 75 to 15 parts by weight of a polymer derived from methyl methacrylate or a monomeric mixture comprising methyl methacrylate and one or more other monomers copolymerisable therewith, such as ethyl acrylate, acrylonitrile or styrene, to the extent that the methyl methacrylate comprises at least 55 % by weight and preferably at least 75 % by weight of the monomeric mixture.

Preferred MBS rubbers for use in the present invention are those manufactured by Rohm & Haas under the trade mark Paraloid, e.g. Paraloid BTA753 and Paraloid BTA736. These rubbers typically have primary particle sizes of 0.05 to 1 micron, e.g. 0.1 to 0.5 microns.

The polymerisable compositions of the invention comprise a polymerisable liquid component. The polymerisable liquid component comprises an ethylenically unsaturated urethane composition which comprises at least one unsaturated urethane compound having an average double bond functionality (i.e. an average number of double bonds per molecule) of greater than 1.0, or the precursors for such a urethane composition. Generally, the polymerisable liquid comprises a preformed unsaturated urethane composition. Preferably, the unsaturated urethane composition is the product obtained from the reaction of a reactant mixture containing at least one hydroxyl containing vinyl monomer, at least one organic polyisocyanate or isocyanate functional derivative thereof having an average-isocyanate functionality of at least 2.0, and optionally at least one saturated compound containing a plurality of isocyanate reactive groups.

In a preferred embodiment, the unsaturated urethane composition is a polyurethane polyacrylate and/or polymethacrylate composition which is the reaction product of:

(1) at least one hydroxyalkyl acrylate and/or hydroxyalkyl methacrylate compound;

(2) at least one polyisocyanate or isocyanate functional derivative thereof having an average isocyanate

functionality of at least 2.0 and preferably greater than 2.0; and

(3) optionally at least one saturated polyol.

Where the polyurethane polyacrylate and/or polymethacrylate composition is derived from reactants (1) and (2), the proportions of the reactants can be varied within a wide range providing the final product has the requisite amount of ethylenic unsaturation. However, it is generally preferred to react all, or essentially all, the isocyanate groups to form urethane groups, which means that the amount of the hydroxyalkyl (meth)acrylate relative to the polyisocyanate or isocyanate functional derivative thereof should be such as to provide at least one mole of hydroxyl groups per mole of isocyanate groups. Excess (unreacted) hydroxyalkyl (meth)acrylate in the final product is in general not objectionable, since any such excess may be incorporated in the copolymer produced in the subsequent addition polymerisation reaction. In effect, any excess hydroxyalkyl (meth)acrylate will form at least a part of the copolymerisable monomer vehicle.

Where the polyurethane polyacrylate and/or polymethacrylate composition is derived from reactants (1), (2) and (3), it is desirable to avoid the presence of unreacted polyol in the final product. Accordingly, it is preferred to employ the reactants in such amounts that the polyisocyanate or isocyanate functional derivative provides at least one mole of isocyanate groups per mole of hydroxyl groups provided by the hydroxyalkyl (meth)acrylate and the saturated polyol. Of course, the amount of the hydroxyalkyl (meth)acrylate employed in the urethanation reaction should be such as to provide the requisite amount of ethylenic unsaturation in the final product.

The hydroxyalkyl acrylate and/or methacrylate preferably contains from 2 to 4 carbon atoms in the hydroxyalkyl group; 2-hydroxyethyl and 2-hydroxypropyl acrylates and methacrylates are especially preferred. Mixtures of two or more hydroxyalkyl acrylates and/or methacrylates may be used if desired.

Suitable saturated polyols for the manufacture of the polyurethane poly(meth)acrylate include those conventionally used in the art for producing polyurethanes by reaction of a polyol with a polyisocyanate. Preferably the polyol is a diol or triol, although we do not exclude the possibility that the polyol may contain more hydroxyl groups. Mixtures of two or more polyols may be used if desired.

Representative examples of suitable polyols are the glycols of formula HO-R-OH, where R represents, for example, an alkylene or polyalkylene ether chain, e.g. ethylene glycol, propylene glycol, butan-1,4-diol, pentan-1,5-diol, hexan-1,6-diol, diethylene glycol, dipropylene glycol, polyethylene glycol, polypropylene glycol, polybutylene glycol and polytetrahydrofuran; dihydric phenols and bisphenols, for example, 2,2-bis(4-hydroxyphenyl) propane (Bisphenol A) and bis(4-hydroxyphenyl) sulphone (Bisphenol S), and alkoxylated derivatives of the bisphenols, for example the ethoxylated and propoxylated derivatives thereof.

Further suitable polyols include the triols such as glycerol, pentaerythritol, and trialkylolalkanes, for example trimethylolpropane, triethylolpropane and tributylolpropane, and alkoxylated derivatives of the trialkylolalkanes, for example the ethoxylated and propoxylated derivatives thereof.

The average isocyanate functionality of the polyisocyanate or isocyanate functional derivative thereof (i.e. the average number of isocyanate groups per molecule) is at least 2.0 and preferably is greater than 2.0. In a more preferred embodiment, the average isocyanate functionality of the polyisocyanate or derivative thereof is at least 2.2 and preferably is in the range 2.5 to 3.0. A mixture of polyisocyanates or derivatives thereof having an average isocyanate functionality as specified herein may also be used.

The polyisocyanates may be of the aliphatic, alicyclic or aromatic type and may be selected from any of those polyisocyanates that are conventionally used in the art for the preparation of polyurethane polymers. Examples of aliphatic polyisocyanates include ethylene diisocyanate, trimethylene diisocyanate, tetramethylene diisocyanate, pentamethylene diisocyanate and hexamethylene diisocyanate. Examples of alicyclic polyisocyanates include isophorone diisocyanate and 4,4-(di-isocyanato)-dicyclohexylmethane. However, the preferred polyisocyanates are the aromatic type polyisocyanates in which the isocyanate groups are bonded to aromatic groups. Examples of aromatic polyisocyanates include, inter alia, 4,4′-diphenylmethane and 2,4′-diphenylmethane diisocyanates, 2,4-tolylene and 2,6-tolylene diisocyanates and polymethylene polyphenyl polyisocyanates. Of these 4,4′-diphenylmethane diisocyanate, 2,4′-diphenylmethane diisocyanate, polymethylene polyphenyl polyisocyanates and the commercially available mixtures thereof are preferred. Preferably the polyisocyanate is or includes a polymethylene polyphenyl polyisocyanate.

Polyisocyanate derivatives which may be used in the preparation of the unsaturated urethane composition include isocyanate functional compositions containing urethane, allophanate, urea, biuret, carbodiimide, uretonimine or isocyanurate groups. Such derivatives and methods for their preparation have been fully described in the prior art.

Urethane-modified polyisocyanates, or prepolymers (hereinafter urethane polyisocyanates), having an average isocyanate functionality as defined above may be obtained by reacting an organic polyisocyanate(s) with the hydroxyl groups of a saturated polyol(s). An excess of the polyisocyanate is normally employed so that the isocyanate functionality of the urethane polyisocyanate will be the same as or greater than the isocyanate functionality of the polyisocyanate used as starting material. Whichever particular polyol is used, the relative proportions of the polyol and polyisocyanate and/or the isocyanate functionality of the polyisocyanate are chosen so as to yield the required isocyanate functionality in the urethane polyisocyanate. If the urethane polyisocyanate is to be obtained from a diisocyanate and where it is desired that the urethane polyisocyanate has an isocyanate functionality of greater than 2.0, reaction of the diisocyanate with a polyol containing more than two hydroxyl groups will be necessary in order to yield a urethane polyisocyanate having the desired isocyanate functionality of greater than 2.0. The urethane polyisocyanate is preferably obtained by reaction of a polyol with a polyisocyanate having an average isocyanate functionality of greater than 2.0.

The polyisocyanates and especially the preferred polyisocyanates mentioned above will generally be employed for the manufacture of the urethane polyisocyanate.

Suitable saturated polyols for the manufacture of the urethane polyisocyanate include those described above as being suitable for reactant (3).

In preferred embodiments, the at least one unsaturated urethane compound has an average double bond functionality of at least 2.0, more preferably at least 2.2, and especially in the range of from 2.5 to 3.0. Preferably, the unsaturated urethane composition comprises from 0.05 to 0.5 moles, preferably from 0.1 to 0.5 moles, and more preferably from 0.2 to 0.5 moles of ethylenic double bonds per 100 g thereof. Unsaturated urethane compositions having the desired amounts of ethylenic unsaturation can be obtained by appropriate selection of the amounts and types of precursors which are used in the preparation thereof.

The polymerisable liquid also comprises at least one ethylenically unsaturated monomer which is a vehicle for, and is copolymerisable with the unsaturated urethane composition which is either present as a preformed species, or is formed by reaction of the precursors therefor in the at least one ethylenically unsaturated monomer. The at least one ethylenically unsaturated monomer may be selected from the unsaturated, addition polymerisable monomers known in the art.

Suitable ethylenically unsaturated monomers may be selected from, inter alia, the acrylic type monomers such as acrylic, methacrylic and chloroacrylic acids (i.e. $CH_2$=CHClCO.OH), the metal acrylates and methacrylates, and the esters of acrylic, methacrylic and chloroacrylic acids with aliphatic, alicyclic or aromatic alcohols/phenols; the vinyl aromatic monomers, e.g. styrene and substituted derivatives of styrene such as the halogenated derivatives thereof and vinyl toluene; the vinyl esters, e.g. vinyl acetate, and vinyl pyrrolidone. Further suitable examples of ethylenically unsaturated monomers which may be employed in the polymerisable compositions of the invention are the polyethylenically unsaturated cross-linking monomers of the type that are known in the art, in particular the polyethylenically unsaturated monomers having two or more acrylic or methacrylic double bonds such as ethylene glycol dimethacrylate, ethylene glycol diacrylate, 1,3-butylene glycol dimethacrylate, 1,3-butylene glycol diacrylate, triethylene glycol dimethacrylate, triethylene glycol diacrylate, trimethylolpropane trimethacrylate and trimethylolpropane triacrylate.

The preferred ethylenically unsaturated monomers are the esters of acrylic and methacrylic acid with alcohols and phenols having the formula $CH_2=C(R)CO.OR^1$ where R is H or methyl and $R^1$ is an optionally substituted alkyl, aryl, aralkyl, alkaryl or cycloalkyl group. Suitable substituents include halo and hydroxy substituents. Preferred monomers therefore include methyl methacrylate, ethyl methacrylate, isopropyl methacrylate, isobutyl methacrylate, cyclohexyl methacrylate, isobornyl methacrylate, benzyl methacrylate, phenyl methacrylate, isobornyl acrylate, hydroxyethyl methacrylate and hydroxypropyl methacrylate. Particularly preferred monomers are the optionally substituted alkyl methacrylates having the formula $CH_2=C(CH_3)CO.OR^2$ where $R^2$ is an optionally substituted, but preferably unsubstituted $C_{1-10}$ alkyl group. Methyl methacrylate is an especially preferred monomer.

It will be appreciated from the above that the preferred polymerisable liquid comprises a polyurethane polyacrylate and/or polymethacrylate composition and at least one acrylic and/or methacrylic acid ester monomer. We have found that polymerisable compositions comprising such a polymerisable liquid and an MBS rubber modifier yield cured polymeric products which are typically substantially tougher and less notch sensitive than similar products prepared using an acrylic rubber modifier in place of the MBS. This finding is indeed surprising, since one would expect an acrylic rubber modifier to provide good performance in what is effectively a modified acrylic resin.

The polymerisable liquid preferably comprises from 10 to 90 % by weight, more preferably from 25 to 75 % by weight, and particularly preferably from 25 to 50 % by weight of the unsaturated urethane composition, and from 90 to 10 % by weight, more preferably from 75 to 25 % by weight, and particularly preferably from 75 to 50 % by weight of the at least one ethylenically unsaturated copolymerisable monomer.

Polymerisable liquids comprising a preformed unsaturated urethane composition may be formed by simply adding the copolymerisable monomer(s) to the unsaturated urethane composition. However, if the copolymerisable monomer is of a type which is inert in the conditions used to form the unsaturated urethane composition,

it is most desirable to utilise such as a liquid vehicle in which the urethane composition is prepared.

The polymerisable liquid may also comprise a co-reactive, ethylenically unsaturated polymer resin. For example, ethylenically unsaturated polyester resins may be incorporated into the polymerisable liquid in an amount up to 50 % by weight, e.g. 10 to 50 % by weight, based on the total weight of the unsaturated urethane composition, the copolymerisable monomer(s) and the polyester resin.

The unsaturated urethane composition may be prepared using techniques conventional in the art for the preparation of polyurethanes.

The preparation of the unsaturated urethane composition is preferably carried out in the presence of an inert liquid diluent. A wide range of diluents may be used, but most conveniently, in order to avoid the need for separation of the unsaturated urethane composition, the diluent is a monomer which does not comprise any isocyanate reactive groups and which can therefore, after reaction of the urethane precursors, form at least a part of the copolymerisable monomeric vehicle. Examples of such monomers for use as the liquid diluent are the alkyl methacrylates, e.g. methyl methacrylate and vinyl aromatics, e.g. styrene.

Where it is desired to include in the polymerisable liquid an ethylenically unsaturated monomer which comprises isocyanate reactive groups, such monomer may be added after the reaction to form the unsaturated urethane composition is complete.

Catalysts which may be used in the reaction of the urethane precursors may be those known in the art of polyurethane production, for example tertiary amines and metal salts, e.g. tin (II) octoate and di-n-butyltin dilaurate.

Where the polymerisable liquid comprises the precursors for an unsaturated urethane composition they are generally selected from-the precursors and especially the preferred precursors described supra for the preparation of the polyurethane poly(meth)acrylate. The precursors for the unsaturated urethane composition are reacted in the presence of the at least one ethylenically unsaturated monomer to form the unsaturated urethane composition before effecting at least any substantial polymerisation of the polymerisable double bonds. The reaction of the urethane precursors may be effected during the moulding of the polymerisable compositions, but is preferably effected prior to moulding. Techniques conventional in the art for the preparation of polyurethanes may be employed to prepare the unsaturated urethane composition.

A preferred polymerisable liquid is one which polymerises/cures to form a solid polymer matrix having a glass transition temperature (tan delta max) of at least 60°C, preferably at least 80°C and more preferably at least 100°C, e.g. 100 to 180 °C.

The preferred polymerisable liquids have a viscosity, as measured at 20 °C on a Brookfield viscometer, in the range of from 50 to 500 centipoise, since such liquids may be readily transferred to the mould. Furthermore, polymerisable liquids having a viscosity within this range have the ability to contain large amounts of a particulate inorganic filler (described hereinafter) and still retain a viscosity which enables them to be readily transferred to a mould, for example a viscosity of less than 1000 centipoise when measured as described above. More preferably the polymerisable liquid has a viscosity in the range of from 50 to 400 centipoise and especially in the range of from 50 to 300 centipoise.

The polymerisable compositions of the invention may comprise a preformed polymer, for example as a thickening aid to increase the viscosity of the polymerisable compositions or to reduce in-mould shrinkage when the polymerisable compositions of the invention are cured within a mould.

The polymerisable compositions of the invention may also comprise a particulate inorganic filler material. One advantage of incorporating a particulate inorganic filler in the polymerisable compositions of the invention is that the mechanical properties of the polymer articles formed on curing such polymerisable compositions may be improved thereby. Any inorganic filler may, in reason, be used in the present invention provided that the filler is stable in the polymerisable liquid and the matrix polymer prepared therefrom, and under any processing conditions which are employed in the preparation of the filled polymerisable composition or the curing thereof. The inorganic filler may be capable of interacting, e.g. by bonding, with a coupling agent (described hereinafter) so as to provide strong polymer matrix/filler particle bonding.

Suitable fillers may include amphoteric, basic and silicaceous fillers, and may be of natural or synthetic origin. The filler, if amphoteric, may, for example, be an oxide of this type. Suitable such fillers include oxides and hydroxides of aluminium, including hydrated alumina. The filler, if basic, may, for example, be an oxide, a hydroxide, a carbonate or a basic carbonate. Suitable fillers of this type include, inter alia, the oxides, hydroxides, carbonates and basic carbonates of alkaline earth metals and of zinc. Suitable silicaceous fillers include, inter alia, substantially pure silica, for example sand, quartz, cristobalite and precipitated or fused silica, or the metal silicates or aluminosilicates. Further useful fillers may be selected from the metal aluminates, phosphates, sulphates, sulphides and carbides.

Preferably, the inorganic fillers for use in the invention have a mean particle size of less than 100 microns. Typically the particles will have a specific surface area of 0.1 to 250 $m^2/g$. In talking about the size of the particles

we are referring to the size thereof across their largest dimension. The filler particles for use in the invention may have any form suitable for a filler, e.g. they may be of granular, fibrillar or laminar form.

In order to attain high filler loadings the filler may also consist of two or more sets of particles having widely differing mean sizes such that one set of particles can fit in the interstices of the other within the polymer matrix.

The polymerisable compositions may contain from 20 % to 90 % by weight of a particulate filler material. Preferably, the proportion of filler is from 35 % to 85 % by weight, more preferably from 50 % to 80 % by weight, of the total weight of the polymerisable composition.

Where the particulate inorganic filler is already available in the required particle size, the particles of inorganic filler can be dispersed in the polymerisable liquid using techniques such as roll milling or high shear mixing. A further suitable mixing technique involves dispersing the filler in a component of the polymerisable liquid, e.g. in a portion of the copolymerisable monomer vehicle, and then mixing the resultant dispersion with the remaining components of the polymerisable liquid. Alternatively, the filler particles may be produced directly in the presence of the polymerisable liquid, or in a liquid component thereof, by comminution of coarse particles. Comminution of coarse material to yield smaller size particles can be readily carried out using conventional ball mills, stirred ball mills or vibratory mills.

The polymerisable compositions of the invention may also comprise a course filler material, e.g. a filler material the particles of which have a mean size across their largest dimension of greater than 100 microns, e.g. greater then 200 microns.

When the polymerisable compositions of the invention comprise a particulate inorganic filler they may comprise a polymeric dispersant to assist the dispersion of the filler in the polymerisable liquid. Furthermore, the filled polymerisable compositions of the invention may comprise a coupling agent having active groupings to promote polymer matrix/filler particle bonding. Suitable coupling agents comprise one or more groups capable of interacting with groups in the particulate inorganic filler, and also one or more ethylenically unsaturated, addition polymerisable groups which can copolymerise with the constituents of the polymerisable liquid. A suitable coupling agent when silicaceous fillers are employed is $\gamma$ -methacryloxypropyl trimethoxysilane.

The selection of a suitable dispersant and coupling agent is within the purview of the man skilled in the art. Suitable polymeric dispersants and coupling agents are described in the present applicants patent specification GB-1,493,393 the disclosure in which is incorporated herein by way of reference.

The polymerisable compositions of the invention may also incorporate other additives conventional in the art such as pigments, dyestuffs and internal mould release agents.

The particulate rubber modifier may be dispersed in the polymerisable liquid using vigorous mixing, e.g. as is provided by a high shear mixer. A further suitable mixing technique involves dispersing the rubber modifier in a portion of the copolymerisable monomer vehicle and then adding the resulting liquid/rubber dispersion, with mixing, to the remaining components of the polymerisable liquid.

The polymerisation/curing of the polymerisable composition of the invention to yield a rubber modified polymer article may be carried out using techniques well known in the art of free radical addition polymerisation. As already stated supra, where the polymerisable composition comprises the precursors for an unsaturated urethane composition, these will be reacted to form the urethane composition prior to the polymerisation process. In the polymerisation process, the components of the polymerisable liquid polymerise via their double bonds to form a solid, cross-linked polymer matrix in which the MBS rubber modifier is embedded. A particularly convenient polymerisation technique is an in-mould polymerisation process in which the polymerisable composition is introduced into a mould and then cured. The polymerisation can be initiated by a wide range of free radical generating catalysts. The catalyst is preferably added immediately prior to curing the polymerisable compositions, this is particularly important where the catalyst is activated at temperatures below or around ambient. The catalyst is conveniently used in an amount ranging from 0.1 % to 3.5 % by weight based on the total weight of the polymerisable liquid. Suitable catalysts are well known to those skilled in the art and may include, for example, organic peroxides, such as dioctanoyl peroxide and dibenzoyl peroxide which may be used in conjunction with an amine accelerator, e.g. N,N-dimethylaniline or N,N-dimethyl-para-toluidine; the hydroperoxides, such as t-butyl hydroperoxide; the peroxydicarbonates, such as diisopropyl-peroxydicarbonate, and the peresters. A particularly suitable catalyst is dibenzoyl peroxide with N,N-dimethylaniline or N,N-dimethyl-para-toluidine accelerator. The dibenzoyl peroxide and amine accelerator may be added to separate portions of the polymerisable composition which are then combined prior to the curing process.

Where heat activated polymerisation catalysts are employed the mould should be heated, e.g. by a heat transfer fluid circulating within the mould parts defining the mould cavity, in order to activate the catalyst and initiate the curing reaction. The mould may also be heated where it is desired to subject the polymer article prepared in the mould to an in-mould post-cure reaction.

It may be desirable during the filling of the mould to maintain the temperature of the mould surfaces below the temperature at which the catalyst is activated, so as to prevent premature polymerisation and gelation.

Prior to moulding, the internal mould surfaces may be coated with a release agent to prevent adhesion of the cured materials to the mould and to obtain a good surface finish. These techniques are well known in the art. Examples of suitable external mould release agents include, inter alia, polytetrafluoroethylene, silicone and polyvinylalcohol.

After the in-mould polymerisation reaction is complete, the polymer article may be demoulded and then optionally subjected to a post-curing process. Alternatively, the polymer article may be post-cured in the mould prior to demoulding. Post-curing may be effected by heating the article to a temperature in excess of 100°C for a period in excess of one hour.

A particularly desirable use for the polymerisable compositions of the invention is for the production of fibre reinforced polymer articles, especially glass-fibre reinforced polymer articles, by automated processes.

One example of such a process is a closed mould process using matched male and female mould halves. The fibrous reinforcement (which may be chopped strand mat, continuous filament mat, woven continuous filament mat or any other variation of mat) is placed in the open mould, the mould is closed and the polymerisable composition charged to the mould, either by applying a vacuum to the closed mould cavity to draw the composition into the mould or by pumping the resin through, or by a combination of vacuum assisted pumping. The polymerisable composition thenpolymerises/cures in-mould under the action of a suitable catalyst system which initiates the polymerisation reaction, and after a suitable period of time (the cure time) the fibre reinforced polymer article can be removed from the mould (demoulded). Alternatively, the fibrous reinforcement and the polymerisable composition may be placed in the open mould and the act of mould closure itself causes the composition to flow through the fibres. Where the above described techniques are used to make fibre reinforced articles it is, of course, necessary that the polymerisable composition has a viscosity which is low enough to enable it to flow through and wet out the fibres before any substantial polymerisation thereof has occurred.

Other known techniques for preparing fibre reinforced polymer articles, e.g. pultrusion, sheet and dough moulding processes, may be applied to the preparation of such articles from the polymerisable compositions of the invention.

The invention is now illustrated, but not limited, by the following Examples. The polymerisable compositions in all the following Examples, including the comparative tests, were used to make polymer plaques.

## Examples

In the following Examples:-

"Modar" is a trade mark of Imperial Chemical Industries PLC used in relation to a polymerisable resin of methyl methacrylate and a polyurethane polymethacrylate derived from 2-hydroxyethyl methacrylate and an organic polyisocyanate having an average isocyanate functionality greater than 2.0 ("Suprasec" (TM) DND).

"Suprasec" (TM) DND is a polyisocyanate composition manufactured by Imperial Chemical Industries PLC comprising a mixture of 4,4′-diphenylmethane diisocyanate together with related polymethylene polyphenyl polyisocyanates of higher isocyanate functionality. "Suprasec" DND has an isocyanate content of from 30.0 to 31.5 %.

"Paraloid" is a trade mark of Rohm and Haas used in relation to rubber modifiers which they manufacture. Paraloid BTA753 and BTA736 are MBS rubber modifiers; Paraloid KM334 and KM323B are acrylic rubber modifiers.

"Perkadox" is a trade mark relating to free radical polymerisation catalysts.

"$K_{IC}$" is a measure of the notch sensitivity in Mpa/m$^{\frac{1}{2}}$. The higher the value for $K_{IC}$ the lower is the notch sensitivity of the material being tested. In the following Examples $K_{IC}$ was measured at ambient temperatures on an Instron machine according to ASTM E399 using a single edged notch and a cross-head speed of 0.5mm/min. The samples used for the test had a thickness of 4mm.

"$G_{IC}$" is a measure of the energy required to propagate a crack in J/m$^2$ and is indicative of the toughness of the material. The higher the value for $G_{IC}$ the tougher is the material being tested. $G_{IC}$ was calculated from $K_{IC}$ and the flexural modulus (E) according to the relationship:

$$G_{IC} = \frac{K_{IC}^{2}}{E} \times (1 - \nu^{2})$$

where ν is Poisson's ratio. The calculation of $G_{IC}$ is explained in "Fracture Behaviour of Polymers" by A J Kinlock and R J Young, Elsevier Science. The flexural modulus was measured at ambient temperatures using an Instron machine.

Preparation of Modar resin A:

"Suprasec" DND (200g) and 2-hydroxyethyl methacrylate (HEMA) (200g) were added to methyl methacrylate (400g). The solution was stirred at ambient temperature and 4.0g of di-n-butyltin dilaurate were added. The heat of reaction raised the temperature of the mixture to 80 °C after a period of 3 minutes from the addition of the di-n-butyltin dilaurate. The mixture was stirred until the temperature had returned to ambient. The final product, a clear, brown solution of the polyurethane polymethacrylate in methyl methacrylate, was used to prepare the polymerisable compositions and rubber modified polymer articles of the present invention.

Modar resin A when cured gives a polymer which has a glass transition temperature (tan delta max) of 150.5 °C (measured at 1Hz - increasing the temperature at a rate of 4 °C/min).

Preparation of Modar resin B:

The same method as described above for the preparation of Modar resin A was employed except that the reactants and catalyst were used in the following quantities:

| | |
|---|---|
| methyl methacrylate | 650g |
| "Suprasec" DND | 175.9g |
| HEMA | 175.9g |
| di-n-butyltin dilaurate | 3.52g |

The reaction exothermed to 65 °C. The final product, a clear, brown solution of the polyurethane polymethacrylate in methyl methacrylate, was used to prepare the polymerisable compositions and rubber modified polymer articles of the present invention.

Modar resin B when cured gives a polymer which has a glass transition temperature (tan delta max) of 136.0 °C (measured at 1Hz - increasing the temperature at a rate of 3 °C/min).

Examples 1 to 3

These Examples illustrate the preparation of rubber modified polymer articles of the invention (in the form of 4 mm thick plaques) from Modar resin A and various grades and amounts of Paraloid MBS rubber modifier. The weight of Modar resin and the weight and grade of MBS rubber modifier employed in each Example are given in Table 1.

The MBS rubber modifier was vigorously stirred into Modar resin A using a high shear mixer. Any loss in weight through evaporation of methyl methacrylate was offset by the addition of methyl methacrylate.

The resulting resin/rubber dispersion was divided into two equal portions (2 x 160g). To one of the portions was added a polymerisation catalyst (dibenzoyl peroxide, 6.67g of a 36 % active paste) and to the other was added an accelerator (N,N-dimethyl-p-toluidine, 0.80g). The catalyst and accelerator were thoroughly mixed into their respective portions of the resin/rubber mixture, after which each portion was degassed under vacuum at room temperature. Any evaporation of methyl methacrylate during the mixing and degassing operations was compensated for by the addition of methyl methacrylate.

The two portions were thoroughly mixed and then cured in a mould constructed from two glass plates separated by a PVC gasket. The glass plates were coated on their internal surfaces with a beeswax mould release agent. Curing was initiated at room temperature. During the curing of the polymerisable compositions an exotherm was observed. After cooling, the plaque was demoulded (approximately 60 minutes after initiating the curing reaction) and post cured at a temperature of 115 °C for 2 days.

The mechanical properties ($K_{IC}$ and $G_{IC}$) of the MBS rubber modified polymer plaques were determined and the results are given in Table 2.

Comparative Examples C4 and C5

These Examples illustrate the preparation of rubber modified polymer articles (in the form of 4 mm thick plaques) from Modar resin A and various grades and amounts of Paraloid acrylic rubber modifier. The weight of Modar resin and the weight and grade of the acrylic rubber modifier employed in each Comparative Example are given in Table 1. The same method as described in Examples 1 to 3 was used to prepare the rubber modified polymer articles except that an acrylic rubber modifier was used in place of the MBS rubber modifier.

The mechanical properties ($K_{IC}$ and $G_{IC}$) of the acrylic rubber modified polymer plaques were determined and the results are given in Table 2.

Comparative Example (C6)

In this Comparative Example, Modar resin A, without any MBS rubber modifier, was used to prepare a 4mm thick polymer plaque. The Modar resin (320g) was divided into two portions, and dibenzoyl peroxide (6.67g of a 36 % active paste) was thoroughly mixed into one portion and N,N,-dimethyl-p-toluidine (0.80g) was thoroughly mixed into the other. The two portions were degassed, mixed and then cured in-mould in exactly the same way as for Examples 1 to 3. The plaque was demoulded and post cured at 115 °C for 2 days. The mechanical properties ($K_{IC}$ and $G_{IC}$) of the polymer (i.e. cured Modar resin A) without rubber modifier are given in Table 2.

TABLE 1

| Example No. | Modar Resin A | MBS Impact Modifier | | |
|---|---|---|---|---|
| | | Weight | * % by Weight | Type |
| 1 | 287.0g | 63.0g | 18 | Paraloid BTA753 |
| 2 | 315.0g | 35.0g | 10 | Paraloid BTA753 |
| 3 | 315.0g | 35.0g | 10 | Paraloid BTA736 |
| C4 | 315.0g | 35.0g | 10 | Paraloid KM334 |
| C5 | 315.0g | 35.0g | 10 | Paraloid KM323B |

* - the % by weight of the rubber modifier is the weight of the modifier expressed as a percentage of the total weight of the Modar resin plus modifier.

TABLE 2

| Example No. | Mechanical Measurements | |
|---|---|---|
| | $K_{IC}$ (MPa/m$^{\frac{1}{2}}$) | $G_{IC}$ (J/m$^2$) |
| 1 | 1.77 | 1570 |
| 2 | 1.40 | 590 |
| 3 | 1.46 | 660 |
| C4 | 1.12 | 380 |
| C5 | 1.08 | 350 |
| C6 | 0.70 | 120 |

From the results shown in Table 2, it is evident that $K_{IC}$ and $G_{IC}$ are significantly higher for the MBS rubber modified polymer articles of the invention than for the acrylic rubber modified polymer articles tested and the polymer alone. The incorporation of 18 % by weight of the MBS rubber modifier Paraloid BTA753 into the polymer matrix increased $G_{IC}$ by a factor of thirteen from 120 J/m$^2$ for the polymer alone to 1570 J/m$^2$. Therefore, the MBS rubber modified polymer articles of the invention are much less notch sensitive and much tougher than the acrylic rubber modified polymer articles tested and the polymer alone.

Examples 7 and 8

These Examples illustrate the preparation of rubber modified polymer articles, in the form of 4mm thick plaques, from Modar resin B and Paraloid BTA753 MBS rubber modifier. The same procedure as described above in Examples 1 to 3 was used, except that 8.75 g of dibenzoyl peroxide paste (36 % active) and 1.57 g of dimethyl aniline were used to cure the resin. In Example 7, 15 % by weight, and in Example 8, 10 % by weight of the MBS rubber modifier was used. The weights of Modar resin and MBS rubber modifier which were used in each Example are given in Table 3.

The mechanical properties ($K_{IC}$ and $G_{IC}$) of the MBS rubber modified polymer plaques are given in Table 4.

Comparative Example (C9)

The same procedure as described above in Comparative Example C6 was used to mould a 4mm thick polymer plaque from Modar resin B, except that 8.75 g of dibenzoyl peroxide paste (36 % active) and 1.57 g of dimethyl aniline were used to cure the resin. The mechanical properties of the polymer are given in Table 4.

TABLE 3

| Example No. | Modar Resin B | MBS Impact Modifier | | |
|---|---|---|---|---|
| | | Weight | % by Weight | Type |
| 7 | 297.5g | 52.5g | 15 | Paraloid BTA753 |
| 8 | 315.0g | 35.0g | 10 | Paraloid BTA753 |

TABLE 4

| Example No. | Mechanical Measurements | |
|---|---|---|
| | $K_{IC}$ (MPa/m$^{\frac{1}{2}}$) | $G_{IC}$ (J/m²) |
| 7 | 1.51 | 900 |
| 8 | 1.25 | 550 |
| C9 | 0.51 | 80 |

From the results shown in Table 4, it is evident that $K_{IC}$ and $G_{IC}$ are significantly higher for the MBS rubber modified polymer articles of the invention than for the polymer alone. The incorporation of 15 % by weight of the MBS rubber modifier Paraloid BTA753 into the polymer matrix increases $G_{IC}$ by a factor of eleven from 80 J/m$^2$ for the polymer alone to 900 J/m$^2$. Therefore, the rubber modified polymer articles of the invention are much less notch sensitive and much tougher than the polymer alone.

## Claims

1. A polymerisable composition comprising:
   (A) a polymerisable liquid which on curing forms a solid polymer matrix, said polymerisable liquid comprising:
      (i) an ethylenically unsaturated urethane composition comprising at least one ethylenically unsaturated urethane compound having an average double bond functionality of greater than 1.0, or the precursors for such a urethane composition, and
      (ii) at least one ethylenically unsaturated monomer which is a vehicle for, and is copolymerisable with, the unsaturated urethane composition which is either present as a preformed species or is formed by reaction of the precursors therefor in the at least one ethylenically unsaturated monomer; and
   (B) at least one particulate methyl methacrylate/butadiene/styrene (MBS) rubber modifier.

**2.** A polymerisable composition as claimed in claim 1 wherein the MBS rubber consists essentially of:
(A) 25 to 85 parts by weight of a butadiene/styrene copolymer rubber comprising 50 to 90 % by weight of polymerised residues of butadiene and 10 to 50 % by weight of polymerised residues of styrene, said butadiene/styrene copolymer having grafted thereto
(B) 75 to 15 parts by weight of a polymer derived from methyl methacrylate or a monomeric mixture comprising at least 55 % by weight of methyl methacrylate and one or more other addition polymerisable monomers copolymerisable therewith.

**3.** A polymerisable composition as claimed in claim 1 or claim 2 wherein the particulate MBS rubber modifier is incorporated in the polymerisable composition in an amount of from 0.5 to 50 % by weight based on the weight of the polymerisable liquid.

**4.** A polymerisable composition as claimed in any one of claims 1 to 3 wherein the particulate MBS rubber has a primary particle size in the range 0.05 to 5.0 microns.

**5.** A polymerisable composition as claimed in any one of claims 1 to 4 which comprises a preformed ethylenically unsaturated urethane composition.

**6.** A polymerisable composition as claimed in claim 5 wherein the unsaturated urethane composition is a polyurethane polyacrylate and/or polymethacrylate composition which is the reaction product of:
(1) at least one hydroxyalkyl acrylate and/or hydroxyalkyl methacrylate compound;
(2) at least one polyisocyanate or isocyanate functional derivative thereof having an average isocyanate functionality of at least 2.0; and
(3) optionally at least one saturated polyol.

**7.** A polymerisable composition as claimed in any one of the preceding claims wherein the at least one ethylenically unsaturated monomer is selected from the esters of acrylic and methacrylic acid having the formula $CH_2=C(R)CO.OR^1$ where R is H or methyl and $R^1$ is an optionally substituted alkyl, aryl, aralkyl, alkaryl or cycloalkyl group.

**8.** A rubber modified polymer article prepared from the polymerisable composition claimed in any one of claims 1 to 7.

**9.** A rubber modified polymer article comprising a solid polymer matrix and at least one methyl methacrylate/butadiene/styrene (MBS) rubber modifier embedded in said matrix, said matrix being the addition polymerised reaction product of a polymerisable liquid comprising:
(i) an ethylenically unsaturated urethane composition comprising at least one ethylenically unsaturated urethane compound having an average double bond functionality of greater than 1.0, and
(ii) at least one ethylenically unsaturated monomer which is a vehicle for, and is copolymerisable with, the unsaturated urethane composition.

**10.** A method for preparing a rubber modified polymer article, said method comprising polymerising in mould a polymerisable composition comprising:
(A) a polymerisable liquid which on curing forms a solid polymer matrix, said polymerisable liquid comprising:
(i) an ethylenically unsaturated urethane composition comprising at least one ethylenically unsaturated urethane compound having an average double bond functionality of greater than 1.0, and
(ii) at least one ethylenically unsaturated monomer which is a vehicle for, and is copolymerisable with, the unsaturated urethane composition; and
(B) at least one particulate methyl methacrylate/butadiene/styrene (MBS) rubber modifier.

European Patent Office

# EUROPEAN SEARCH REPORT

Application Number

EP 91 30 9647

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 203 769 (IMPERIAL CHEM IND)<br>* column 1, line 1 - column 2, line 48 *<br>* column 4, line 36 - line 56 *<br>* column 8, line 19 - line 55 *<br>* claims *<br>--- | 1,5-7 | C08F299/06<br>C08L51/08 |
| A | WORLD PATENTS INDEX LATEST<br>Week 9040,<br>Derwent Publications Ltd., London, GB;<br>AN 83-28732K<br>& JP-B-2 040 691 (IDEMITSU KK) 12 September 1990<br>* abstract *<br>----- | 1-3 | |
| | | | TECHNICAL FIELDS SEARCHED (Int. Cl.5) |
| | | | C08F<br>C08L<br>C08G |

The present search report has been drawn up for all claims

| Place of search | Date of completion of the search | Examiner |
|---|---|---|
| THE HAGUE | 24 FEBRUARY 1992 | ENGEL S.L.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)